# EUROPÄISCHE PATENTANMELDUNG

(11) **EP 2 237 592 A2**
(43) Veröffentlichungstag der Anmeldung: **06.10.2010**
(21) Anmeldenummer: 10002848.9
(22) Anmeldetag: 18.03.2010
(51) Int. Cl.: H04W 24/02, H04W 40/12, H04L 12/26

(54) **Verfahren zur Optimierung von Netzwerkstrukturen in Funknetzwerken**

(30) Priorität: 02.04.2009 DE 102009003724
(71) Anmelder: Softing AG, 76131 Karlsruhe (DE)
(72) Erfinder: Krohn, Albert, D-76185 Karlsruhe (DE); Wendhack, Sabin, D-76131 Karlsruhe (DE)
(74) Vertreter: Geitz Truckenmüller Lucht

(57) **Zusammenfassung**

In WirelessHART-Netzwerken sind bereits Mechanismen bekannt, die für einen sinnvollen Aufbau eines Funknetzwerks im Hinblick auf dessen Struktur sorgen, wobei hierzu auch auf so genannte Health-Reports zurückgegriffen wird, welche von den einzelnen Knoten an einen zentralen Master gesendet werden. Aufgabe der Erfindung ist die Verbesserung der Effizienz derartiger Netzwerke. Nachdem aufgrund der bislang erhobenen Daten, welche den Status der Knoten als solche betreffen, keine Rückschlüsse auf die Verbindungsqualität im Netzwerk geschlossen werden können, werden im Rahmen der Erfindung zusätzliche, die Verbindungsqualität charakterisierende Parameter des Netzwerks als Statusdaten in den einzelnen Knoten erhoben. Diese werden von dem zentralen Master ausgewertet, der hieraus Maßnahmen zur Effizienzoptimierung des Netzwerks herleitet und selbsttätig umsetzt.

## Beschreibung

Die vorliegende Erfindung betrifft ein Verfahren zur Optimierung von Netzwerkstrukturen in Funknetzwerken, in denen ein Master jedem anverbundenen Slaveknoten wenigstens einen Zeitschlitz und wenigstens einen Frequenzkanal zur Kommunikation zuweist und den Slaveknoten zyklisch aufruft, innerhalb seines Zeitschlitzes auf dem ihm zugewiesenen Frequenzkanal wenigstens ein Datenpaket zu senden, welches regelmäßig oder im Falle einer ausdrücklichen Anforderung des Masters einen Statusdatensatz mit aufseiten des Slaveknotens ermittelten Statusdaten umfasst.

Ein derartiges Verfahren ist bereits aus der US-Patentschrift 7,420,980 B1 vorbekannt. Die fragliche Patentschrift beschreibt und beansprucht ein im Wesentlichen dem bekannten WirelessHART-System entsprechendes Verfahren, bei welchem zum Aufbau einer Kommunikationsordnung innerhalb eines Funknetzwerks Statusinformationen der einzelnen Knoten des Funknetzwerks berücksichtigt werden.

Das sogenannte WirelessHART-Protokoll sieht zunächst einen zentralen Master vor, welcher zur Regelung der Kommunikation ein Verfahren umsetzt, bei welchem der Master zunächst eine Sendeaufforderung an die einzelnen Knoten schickt und diese sodann hierauf antworten. Der Master kontrolliert daher vollständig die Kommunikationsabläufe in dem jeweiligen Funknetzwerk. Das hierfür verwendete Kommunikationsschema besteht aus einem zyklisch durchlaufenden Superframe, innerhalb dessen eine Anzahl von Zeitschlitzen vorgesehen ist, wobei für jeden dieser Zeitschlitze auch eine Mehrzahl von Frequenzkanälen wählbar ist. Auf diese Weise ist es möglich, dass mehrere Kommunikationsschritte innerhalb eines Zeitschlitzes dadurch stattfinden, dass diese auf verschiedene Frequenzkanäle verteilt werden.

Ein derartiges, zentral gesteuertes Kommunikationssystem hat den Nachteil, dass die relativ unautonom handelnden Knoten nur sehr beschränkte Möglichkeiten haben, auf die Kommunikationsabläufe einzuwirken. So werden die einzelnen Knoten sich selbsttätig dem Netzwerk hinzufügen können, indem sie auf Anmeldeanforderungen bereits im Netzwerk angemeldeter Knoten horchen, auf diese reagieren und sich auf diese Weise beim Master des Netzwerks anmelden, jedoch haben die Knoten keinerlei Einfluss auf den ihnen zugeordneten Zeitschlitz oder Frequenzkanal. Bei Beeinträchtigungen der Verbindung wird dies im schlimmsten Fall dazu führen, dass eine derartige Verbindung verloren geht. In dem Fall, dass sie aufrechterhalten werden kann, wird eine abnehmende Qualität der Verbindung jedoch dazu führen, dass häufige Wiederholungen der gesendeten Nachrichten erforderlich werden. Auch dies ist jedoch gerade nicht erwünscht. Durch die Einteilung der Sendeerlaubnis eines jeden Knotens in nur in einem bestimmten Zeitschlitz ist es möglich, zur Energieeinsparung auf eine Sende- und Empfangsbereitschaft während der Dauer der anderen Zeitschlitze zu verzichten. Dies ermöglicht eine besonders energieeffiziente Nutzung der jeweiligen Knoten. Häufige Wiederholungen ein und derselben Nachricht sind jedoch für den Knoten sehr uneffizient, da auf diese Weise unnötig Energie verbraucht wird. Die Lebensdauer ohne Wartung wird daher in einem ungeeigneten Umfeld deutlich kürzer sein, als unter idealen Voraussetzungen.

Aufgabe der vorliegenden Erfindung ist es daher, ein verfahren zu schaffen, in welchem die einzelnen Knoten auf die Qualität der Verbindung zwischen ihnen und dem Master Einfluss nehmen können.

Gelöst wird diese Aufgabe durch ein Verfahren zur Optimierung von Netzwerkstrukturen in Funknetzwerken gemäß den Merkmalen des Hauptanspruchs. Weitere sinnvolle Ausgestaltungen dieses Verfahrens können den Unteransprüchen entnommen werden.

Innerhalb des WirelessHART-Verfahrens ist es bereits bekannt, sogenannte Health-Reports von den einzelnen Knoten an den Master zu übersenden. Innerhalb dieser Health-Reports werden zahlreiche Parameter in Bezug auf die Funktion des einzelnen Knotens an den Master übermittelt, sodass dieser Rückschlüsse auf die Funktion des Knotens ziehen kann. Nachdem sich hieraus aber nur bedingt strukturelle Maßnahmen ableiten lassen, welche insbesondere die Verbindungsqualität innerhalb des Funknetzwerks beeinträchtigen könnten, sieht die Erfindung vor, zusätzliche Statutsdaten zur Charakterisierung der Funkverbindungsqualität im Funknetzwerk aufseiten der Knoten zu sammeln und an den Master zu übertragen, sodass dieser als zentrale Steuereinheit für die Kommunikation im Funknetzwerk hierauf in geeigneter Weise reagieren kann. Der Master, welcher die fraglichen Statusdaten empfängt, wird diese auswerten und daraufhin selbsttätig im Rahmen seiner Möglichkeiten geeignete Maßnahmen zur Optimierung der Effizienz des Funknetzwerks einleiten. Hierzu sind erfindungsgemäß im Master eine Reihe von Regeln und Schwellenwerten vorgegeben, welche eine Entscheidung über einzelne Maßnahmen quantifizierbar machen.

Aufgrund dieses Regelwerks wird der Master gemäß der vorliegenden Erfindung in die Lage versetzt, die Rahmenbedingungen für die Kommunikation zwischen den einzelnen Knoten zu untersuchen und zu verbessern. Energieverbrauch, Reaktionsgeschwindigkeit und Verfügbarkeit des Funknetzwerks werden hierdurch verbessert.

Es ist hierzu anzumerken, dass im einzelnen die Auswertung der Statusdaten und die Einleitung von geeigneten Maßnahmen, sowie die Einordnung der einzelnen Knoten in den Superframe, d.h. die Zuweisung von Zeitschlitzen und Frequenzkanäle für die Kommunikation an die einzelnen Knoten, durch einen so genannten Network Manager erfolgt. Hierbei handelt es sich um eine Software, die üblicherweise im Bereich des Masters läuft, aber auch von diesem entfernt ablaufen kann. Im Rahmen dieser Anmeldung wird der Übersicht halber mit dem Begriff "Master" sowohl der zentrale Kommunikationsknoten, als auch der Network Manager bezeichnet, der jedoch softwaretechnisch und/oder physikalisch von dem zentralen Kommunikationsknoten getrennt sein kann.

Konkret ist es im Rahmen der Erfindung dem Master ermöglicht, bei der Verteilung der Kommunikationszeitpunkte und Frequenzkanäle auf den Superframe hierbei einzelne Frequenzkanäle zumindest innerhalb einzelner Zeitschlitze für die Kommunikation zu sperren. Dies kann dadurch erforderlich werden, dass in den Knoten auf bestimmten Frequenzkanälen verstärkt Prüfsummenfehler auftreten, also davon auszugehen ist, dass Störungen auf dem jeweiligen Frequenzkanal vorliegen. Konkret wird eine Zählung der fraglichen Prüfsummenfehler in den einzelnen Knoten vorgenommen, woraufhin der Master einen Frequenzkanal dann sperrt, wenn ein entsprechender Fehlerzähler innerhalb des Statusdatensatzes der Knoten einen Fehlerschwellwert überschreitet.

Im Rahmen der Kommunikation zweier beliebiger Knoten innerhalb des Funknetzwerks ist es zumeist erforderlich, dass der sendende Knoten von dem empfangenden Knoten in der Rückrichtung eine Bestätigung der empfangenen Daten erhält. Für jedes gesendete Paket erwartet der Sendeknoten jeweils eine derartige Bestätigungsmitteilung innerhalb einer vorgegebenen Zeitspanne. Empfängt er die fragliche Bestätigungsmitteilung innerhalb dieser Zeitspanne nicht, so wird der Sendeknoten annehmen, dass die gesendeten Daten ihren Empfänger nicht erreicht haben und sie daher erneut senden. Die erwarteten, jedoch nicht eingegangen Bestätigungsmeldungen werden in einem gesonderten Zähler aufsummiert, dessen Überschreiten eines entsprechenden Zählerschwellwertes ebenfalls eine Sperrung des betroffenen Frequenzkanals auslöst.

Ein weiterer Grund für eine Sperrung des Frequenzkanals ist die Nutzung desselben durch ein anderes Funknetzwerk. Sobald also ein Knoten des Funknetzwerks eine Nachricht empfängt, welche von einem Knoten eines fremden Funknetzwerks stammt bzw. an einen fremden Knoten gerichtet ist, so setzt im Rahmen des Statusdatensatzes der die fremde Nachricht empfangende Knoten eine Flag, welche dem Master die Belegung auf dem Frequenzkanal anzeigt. Auch auf eine derartige gesetzte Flag kann der Master mit einer Sperrung des Frequenzkanals reagieren, um keine Überlagerung der Kommunikation der beiden Netzwerke auflösen zu müssen. Hierbei kann, muss jedoch nicht, unterschieden werden, ob es sich bei dem fremden Netzwerk um ein anderes WirelessHART-Netzwerk handelt, oder ob es sich um ein Netzwerk handelt, welches ein anderes Protokoll realisiert. Im ersten dieser beiden Fälle wird der Knoten die Nachricht fehlerfrei empfangen und lediglich feststellen, dass diese in Kommunikation mit einem fremden Funknetzwerk erfolgt ist, im zweiten dieser Fälle wird der Knoten ein erhöhtes Energieniveau auf dem fraglichen Frequenzkanal feststellen und dann die Flag setzen, wenn dieses Energieniveau einen entsprechenden Energieschwellwert überschreitet. Ein derartig überhöhtes Energieniveau lässt auf eine wie auch immer geartete Kommunikation auf dem fraglichen Kanal schließen, die jedoch aufgrund der Einteilung innerhalb des Superframes im Rahmen des eigenen Funknetzwerks nicht stattfinden dürfte.

Üblicherweise funktionieren Funknetzwerke nicht nur in direktem Kontakt mit dem Master, sondern auch durch Weiterreichen einer Nachricht über mehrere Brückenknoten hinweg. Auf diese Weise entsteht eine Fahrt vom Master bis hin zu dem eigentlichen Slaveknoten, wobei im Rahmen der Kommunikation mit einem weiter entfernt liegenden Knoten die verwendeten Brückenknoten die Nachrichten der weiter hinten liegenden Knoten in ihrem Sendefenster weiterreichen. Sofern nunmehr ein Slaveknoten, welcher über einen Brückenknoten mit dem Master verbunden ist, seine Verbindung mit diesem Brückenknoten verliert oder auch neu in das Netzwerk eintritt, wird der Master dem Knoten einen neuen Kommunikationspfad zuweisen. Hierzu wartet der Slaveknoten auf eine Anmeldeaufforderung seitens eines verbindungswilligen Knotens, auf welche er nach dem Empfang antwortet und auf diese Weise die Verbindung mit dem Brückenknoten einleitet. Sobald eine Verbindung eines Slaveknotens mit einem Brückenknoten verloren geht, kann der Slaveknoten sogleich versuchen, eine neue Verbindung selbsttätig mit dem Netzwerk herzustellen. Sofern der Master aber Informationen über alternative Pfade besitzt, wird er dem Slaveknoten einen neuen Kommunikationspfad über andere Brückenknoten zuweisen.

Sofern Fehler auftreten, welche nicht durch eine Fremdkommunikation oder Überlagerung von Nachrichten und damit einhergehende Prüfsummenfehler verursacht ist, kann es als alternative Maßnahme auch angezeigt sein, eine andere Kommunikationsroute zu wählen. Dies ist insbesondere dann der Fall, wenn die sogenannte Empfangssignalstärke, kurz RSSI (Received Signal Strength Indication) einen hierfür festgelegten Wert unterschreitet. Wird innerhalb einer Kommunikationsverbindung die Empfangssignalstärke zu schwach, so kann dies möglicherweise durch eine Umplanung des Kommunikationspfads behoben werden. Sofern also ein Knoten eine derartige Beeinträchtigung erkennen lässt, wird der Master den fraglichen Knoten von seinen Verbindungen lösen und einen anderen Kommunikationspfad planen, über welchen er mit dem fraglichen Slaveknoten kommuniziert.

Ebenfalls wird der Master eine Verbindung lösen und neu planen, welche ein Überschreiten des Zeitfensters bedeuten könnte, nämlich dann, wenn ein Systemzeitunterschied zwischen dem Brückenknoten und dem Slaveknoten oberhalb eines hierfür vorgesehenen Zeitschwellwerts festzustellen ist.

Idealerweise sollte in diesem Fall ein zweiter möglicher Brückenknoten vorhanden sein, über den der Slaveknoten den Datenverkehr umleiten kann und dessen Systemzeit von der Zeit des Slaveknoten weniger abweicht.

Soweit hingegen lediglich die durchschnittliche Abweichung der Systemzeit einen Schwellwert überschreitet, kann der Master alternativ hierzu vorsehen, dass zusätzliche Synchronisationsmeldungen zwischen den beiden Knoten ausgetauscht werden, um eine bessere Synchronisation zu erreichen.

Ein weiteres wesentliches Kriterium innerhalb des Netzwerks ist die Latenzzeit, sodass es von Interesse ist, die Latenzzeit einer Verbindung des Slaveknotens zum Master zu messen. Bei Überschreiten einer festgelegten Höchstlatenzzeit wird der Master die Verbindung des Slaveknotens wiederum lösen und einen alternativen Kommunikationspfad planen, sodass sich der Slaveknoten über einen anderen Brückenknoten mit dem Master kommunizieren kann, ohne dabei den Schwellwert der Latenzzeit zu überschreiten.

Bei den Funkknoten handelt es sich üblicherweise um autonome, batteriebetriebene Knoten, deren Betriebsdauer im Wesentlichen von ihrem Energieverbrauch abhängt. Es ist daher eminent wichtig, den Energieverbrauch im Rahmen zu halten. Es ist daher innerhalb des Statusdatensatzes eine Zählvariable für die ununterbrochene Laufzeit der CPU des Knotens, sowie der Sende- und/oder der Empfangseinrichtungen als größte Energieverbraucher innerhalb des Knotens vorzusehen. Sobald die ununterbrochene Laufzeit dieser Komponenten einen Grenzwert übersteigt, wird der Master mehr Ruhezeiten für den fraglichen Knoten einplanen, um sicherzustellen, dass durch seltenere Wiederholungen der regelmäßigen Abfragen bei dem fraglichen Knoten eine größere Energieeinsparung erzielt werden kann. Insbesondere kann eine stärkere Belastung der CPU bzw. der Sende- und/oder Empfangseinrichtung dann erfolgen, wenn große Datenmengen zu bewältigen sind oder häufige Wiederholungen innerhalb der Kommunikation des fraglichen Knotens anstehen.

Um die Anmeldung neuer Knoten oder um die Neuanmeldung von Knoten, deren Verbindung vom Master gelöst wurde, zu erleichtern, sollten möglichst viele Knoten regelmäßig Anmeldeaufforderungen broadcasten, um neuen Knoten die Möglichkeit zu geben, sich bei ihnen anzumelden. Insoweit wird jeder neu angemeldete Knoten eine Variable in dem Statusdatensatz vorsehen, in welcher eingetragen wird, wie viele Anmeldeaufforderungen im Zusammenhang mit der eigenen Anmeldung empfangen worden sind und gegebenenfalls auch wie viele Anmeldeknoten verfügbar waren, an welchen eine Anmeldung hätte durchgeführt werden können. Sofern diese Anzahlen jeweils einen Schwellwert nicht überschreiten, wird der Master zusätzliche Anmeldeaufforderungen von weiteren Slaveknoten einplanen, um die Anmeldesituation innerhalb des Netzwerks zu verbessern.

Ebenfalls kann der Master aufgrund eines innerhalb des Statusdatensatzes mitgeführten Zählers für gescheiterte Verbindungsversuche bzw. für Wiederholungsversuche zum Anbahnen einer Verbindung entscheiden, ob die Anzahl derzeit ausgesendeter Anmeldeaufforderungen den Anforderungen ausreicht. Sofern der Zähler für die gescheiterten Verbindungsversuche bzw. Wiederholungsversuche einen hierfür vorgesehenen Schwellwert überschreitet, wird also der Master für die benachbarten Knoten zusätzliche Anmeldungsaufforderungen einplanen, so dass ein Anmelden oder Wiederanmelden bei dem Netzwerk erleichtert wird.

Die vorstehend beschriebene Erfindung wird im Folgenden an Hand eines Ausführungsbeispiels näher erläutert.

### Es zeigen

- Figur 1: ein schematisch dargestelltes Funknetzwerk mit einem Master und 9 Knoten sowie ein Superframe zur Koordination der Kommunikation innerhalb des Netzwerks,
- Figur 2: das Funknetzwerk gemäß Figur 1 mit einer möglichen Ausgangskonfiguration der Kommunikation innerhalb des Superframes,
- Figur 3: das Funknetzwerk gemäß Figur 2 nach der Sperrung eines Frequenzkanals bzw. dem Wechsel eines anderen Frequenzkanals und
- Figur 4: das Funknetzwerk gemäß Figur 3 mit weiteren Maßnahmen des Masters.

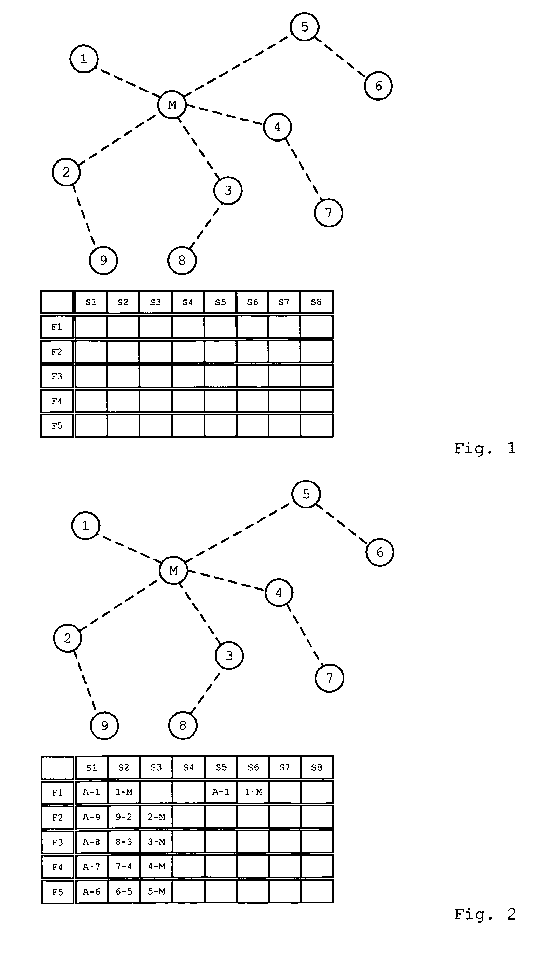

Figur 1 zeigt ein Funknetzwerk bestehend aus einem Master M und einer Reihe von Slaveknoten 1-9, welche letzteren teilweise als Brückenknoten 2, 3, 4, 5 und teilweise als endständige Knoten 1, 6, 7, 8 und 9 angeordnet sind. Diese Unterscheidung bezieht sich lediglich auf die momentane Lage im Netzwerk. Endständige Knoten und Brückenknoten sind ansonsten vollkommen gleichwertig. Die Knoten 1 bis 5 sind direkt mit dem Master M verbunden. Ebenfalls zeigt Figur 1 ein Superframe, welches eine Anzahl von Zeitschlitzen S1 bis S8 zeigt, welche wiederum auf einer Reihe von Frequenzkanälen F1 bis F5 zur Verfügung stehen. Innerhalb des Funknetzwerks wird der Master M den Slaveknoten 1-9 für jeden Kommunikationsschritt einen Zeitschlitz S1 bis S8 und Frequenzkanal F1 bis F5 zuweisen. Innerhalb dieses Zeitschlitzes S1 bis S8 können die Slaveknoten 1-9 untereinander oder mit dem Master M kommunizieren oder Anmeldeaufforderungen A broadcasten um weitere Knoten in dem Netzwerk anzumelden.

Im Rahmen der zwischen den Knoten 1-9 und dem Master M stattfindenden Kommunikation wird jeweils ein Statusdatensatz an den Master M übertragen, welchem der Master M von jedem Knoten eine Reihe für das Funknetzwerk relevanten Parametern entnehmen kann. Anhand dieser Parameter kann der Master M auf die Gestaltung des Funknetzwerks und der Einteilung der Knoten in das Superframe Einfluss nehmen um die Effizienz des Netzwerks zu optimieren.

Figur 2 zeigt das Funknetzwerk mit einem beispielhaft ausgefüllten Superframe, in welchem teilweise Anmeldeaufforderungen einzelner Knoten innerhalb eines Zeitschlitzes S1 bis S8 vorgesehen sind, aber auch Kommunikationspfade für die Kommunikation der einzelnen Slaveknoten 1-9 mit dem Master angelegt sind. Im vorliegenden Fall ist es vorgesehen, dass der Knoten 1 innerhalb des Frequenzkanals F1 innerhalb von zwei Zeitschlitzen S2 und S6 mit dem Master M kommuniziert. In den Zeitschlitzen S1 und S5 wird der Knoten 1 Anmeldeaufforderungen A broadcasten, auf welche von Seiten anmeldewilliger Knoten geantwortet werden kann. Durch eine derartige Beantwortung einer Anmeldeaufforderung A kann der Anmeldevorgang in das Funknetzwerk eingeleitet werden.

Auch den anderen Knoten 2-9 sind, teilweise zur Kommunikation und teilweise zur Aussendung von Anmeldeaufforderungen A, Zeitschlitze S1 bis S8 innerhalb der Frequenzkanäle F1 bis F5 zugeteilt.

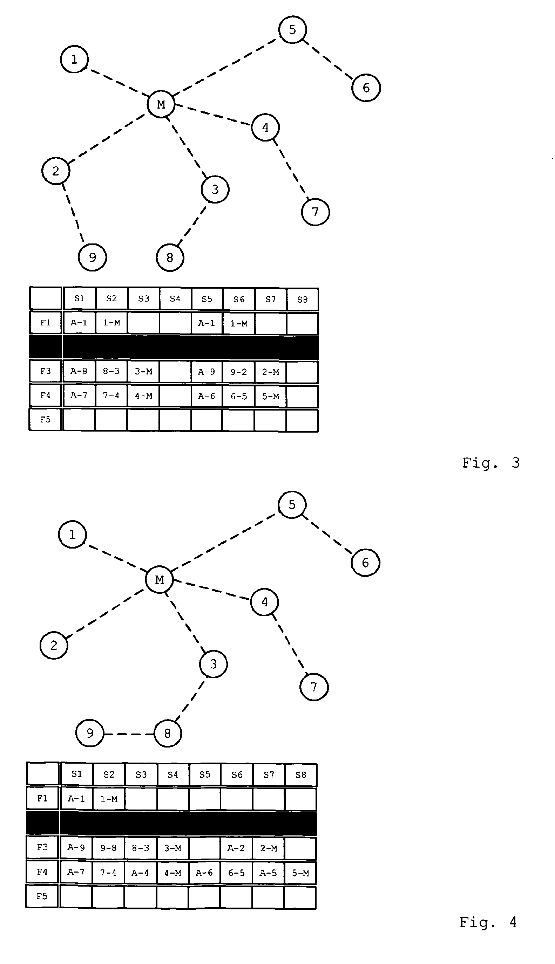

Figur 3 zeigt das Funknetzwerk und den Superframe nach ersten Maßnahmen des Masters M. So ist dem Knoten 2 eine Nachricht zugegangen, welche von einem fremden WirelessHART-Netzwerk stammt und insoweit auch einem fremden Master zugedacht war. Hieraus leitet der Slaveknoten 2 eine Belegung mit dem fremden WireslessHART-Netzwerk auf dem von dem Knoten 2 benutzten Frequenzkanal F2 ab und meldet dies im Rahmen seiner Übertragung der Statusdaten an den Master M. Dieser setzt den Frequenzkanal F2 daraufhin für die Kommunikation innerhalb des Funknetzwerks auf eine Blacklist und sperrt damit den Zugriff auf den fraglichen Frequenzkanal F2. Hierzu ordnet er die bislang im Frequenzkanal F2 vorgesehenen Kommunikationsereignisse in andere Felder des Superframes um, konkret in den benachbarten Frequenzkanal F3. Aufgrund eines zu häufigen Ausbleibens von Bestätigungsmeldungen im Rahmen der Kommunikation des Brückenknotens 5 mit benachbarten Knoten wird auch sämtliche mit diesem Brückenknoten 5 stattfindende Kommunikation in einen anderen Frequenzkanal verlegt, nämlich konkret in den Frequenzkanal F4. Durch diese Maßnahmen verhindert der Master M häufige Wiederholungen auf dem Frequenzkanal F2, die aufgrund der zu erwartenden Kollisionen mit Nachrichten aus dem fremden Netzwerk zu befürchten sind. Ebenfalls verhindert der Master eine Reihe von unnötigen Wiederholungen auf dem Frequenzkanal F5, die aufgrund der offenbar schlechten Empfangsqualität im Knoten 5 zu erwarten gewesen wären, nachdem dieser Knoten seine Nachrichten hätte mehrfach wiederholen müssen.

Figur 4 zeigt weitere Maßnahmen des Masters innerhalb des Funknetzwerks, welche zu dessen Optimierung beitragen sollen. So war ursprünglich festzustellen, dass der Knoten 9 sich nur schwer mit dem Anmeldeknoten 2 in Verbindung setzen konnte. Hieraus hat der Master M den Rückschluss gezogen, dass die Verbindung zwischen dem Slaveknoten 9 und dem Anmeldeknoten 2 nicht optimal sein könnte und löst die Verbindung zwischen den beiden Slaveknoten 2 und 9 und ersetzt den Kommunikationspfad durch eine Alternative. Hierfür eignet sich der in der Nähe des Knotens 9 befindliche Knoten 8, so dass der Master M diesen Knoten als neuen Brückenknoten für den Slaveknoten 9 auswählt und einplant. Knoten 9 geht daher eine Verbindung mit dem Knoten 8 ein und ist nun über diesen und den weiteren Brückenknoten 3 mit dem Master M verbunden. Nachdem zugleich deutlich wird, dass lediglich wenige Knoten für neue Verbindungen an dem Funknetzwerk zur Verfügung stehen, hat der Master M weitere Knoten mit der Aussendung von Anmeldeaufforderungen beauftragt und diese in entsprechenden Zeitschlitzen S1 bis S8 eingeplant.

Vorstehend beschrieben ist somit ein Verfahren zur Optimierung von Netzwerkstrukturen in Funknetzwerken, welches es dem Master des Netzwerks ermöglicht, Maßnahmen zur Verbesserung der Effizienz innerhalb des Netzwerks aufgrund von Informationen der Knoten zu ergreifen, welche sich auf die Verbindungsqualität der einzelnen Knoten untereinander beziehen. Dies wird durch die Übermittlung eines Statusdatensatzes mit die Netzwerkverbindung charakterisierenden Parametern an den Master realisiert, auf welche der Master mit der Ergreifung geeigneter, in festen Regeln vorgegebener Maßnahmen reagieren kann.

### BEZUGSZEICHENLISTE

- A: Anmeldeaufforderung
- F1-F5: Frequenzkanäle
- M: Master
- S1-S8: Zeitschlitze
- 1-9: Slaveknoten
- 1-9, M: Anmeldeknoten
- 2,3,4,5: Brückenknoten

## Patentansprüche

1. Verfahren zur Optimierung von Netzwerkstrukturen in Funknetzwerken, in denen ein Master (M) jedem anverbundenen Slaveknoten (1-9) wenigstens einen Zeitschlitz (S1-S8) und wenigstens einen Frequenzkanal (F1-F5) zur Kommunikation zuweist und den Slaveknoten (1-9) zyklisch aufruft, innerhalb seines Zeitschlitzes (S1-S8) auf dem ihm zugewiesenen Frequenzkanal (F1-F5) wenigstens ein Datenpaket zu senden, welches regelmäßig oder im Falle einer ausdrücklichen Anforderung des Masters (M) einen Statusdatensatz mit aufseiten des Slaveknotens (1-9) ermittelten Statusdaten umfasst,
**dadurch gekennzeichnet, dass** die Statusdaten aufseiten der Slaveknoten (1-9) erfasste Parameter zur Charakterisierung der Funkverbindungsqualität umfassen, der Master (M) die Statusdaten auswertet und daraufhin selbsttätig Maßnahmen zur Effizienzoptimierung des Funknetzwerks einleitet.

2. Verfahren gemäß Anspruch 1, **dadurch gekennzeichnet, dass** dem Master (M) innerhalb eines Zeitschlitzes (S1-S8) mehrere Frequenzkanäle (F1-F5) gleichzeitig zur Verfügung stehen, wobei der Master (M) einen Frequenzkanal (F1-F5) zumindest innerhalb eines Zeitschlitzes (S1-S8) für die Kommunikation sperren kann.

3. Verfahren gemäß Anspruch 2, **dadurch gekennzeichnet, dass** innerhalb des Statusdatensatzes ein Fehlerzähler für auf einem Frequenzkanal (F1-F5) auftretende Prüfsummenfehler enthalten ist, wobei der Master (M) einen Frequenzkanal (F1-F5) sperrt, sobald der Fehlerzähler für diesen Frequenzkanal (F1-F5) einen Fehlerschwellwert überschreitet.

4. Verfahren gemäß Anspruch 2 oder 3, **dadurch gekennzeichnet, dass** zwei miteinander kommunizierende Knoten (1-9, M) innerhalb des Funknetzwerks den Erhalt eines Datenpakets mit einer Bestätigungsmeldung quittieren, wobei der Statusdatensatz einen Zähler für erwartete, aber nicht erhaltene Bestätigungsmeldungen umfasst und der Master (M) einen Frequenzkanal (F1-F5) sperrt, sobald der Zähler für diesen Frequenzkanal (F1-F5) einen Zählerschwellwert überschreitet.

5. Verfahren gemäß einem der Ansprüche 2 bis 4, **dadurch gekennzeichnet, dass** innerhalb des Statusdatensatzes eine Flag von dem Slaveknoten (1-9) dann gesetzt wird, wenn eine Benutzung des Frequenzkanals (F1-F5) durch ein fremdes Funknetzwerk festgestellt wird, und der Master (M) diesen Frequenzkanal (F1-F5) sodann sperrt.

6. Verfahren gemäß Anspruch 5, **dadurch gekennzeichnet, dass** die Flag für einen Frequenzkanal (F1-F5) dann gesetzt wird, wenn das in dem Slaveknoten (1-9) festgestellte Energieniveau auf diesem Frequenzkanal (F1-F5) einen Energieschwellwert überschreitet.

7. Verfahren gemäß Anspruch 5 oder 6, **dadurch gekennzeichnet, dass** die Flag für einen Frequenzkanal (F1-F5) dann gesetzt wird, wenn wenigstens ein Datenpaket empfangen wird, welches von einem fremden Funknetzwerk stammt oder für ein fremdes Funknetzwerk bestimmt ist.

8. Verfahren gemäß einem der vorhergehenden Ansprüche,
**dadurch gekennzeichnet, dass** eine Kommunikation zwischen dem Master (M) und einem Slaveknoten (1-9) unter Zwischenschaltung wenigstens eines Brückenknotens (2,3,4,5) erfolgt, wobei der Master die Verbindung eines Slaveknotens (1-9) mit einem Brückenknoten (2,3,4,5) lösen und vorzugsweise anschließend einen neuen Kommunikationspfad planen kann.

9. Verfahren gemäß einem der vorhergehenden Ansprüche,
**dadurch gekennzeichnet, dass** ein Slaveknoten (1-9) bei einem Neustart oder bei Verlust einer Verbindung mit einem Brückenknoten (2,3,4,5) auf seitens möglicher Anmeldeknoten (1-9, M) ausgesandte Anmeldeaufforderungen (A) horcht und zum Anbahnen einer Verbindung mit einem in Reichweite befindlichen Anmeldeknoten auf dessen Anmeldeaufforderung (A) antwortet, oder vonseiten des Masters (M) in einen anderen Kommunikationspfad eingeplant wird, wobei vorzugsweise der Statusdatensatz einen Zähler für gescheiterte Verbindungsversuche und/oder einen Zähler für Wiederholungsversuche zum Anbahnen einer Verbindung umfasst, und der Master (M) die Verbindung des Slaveknotens (1-9) mit seinem Vorgängerknoten (2,3,4,5,M) löst und gegebenenfalls einen neuen Kommunikationspfad zu dem Slaveknoten (1-9) plant, wenn einer dieser Zähler einen Schwellwert überschreitet.

10. Verfahren gemäß Anspruch 9, **dadurch gekennzeichnet, dass** eine Kommunikation zwischen dem Master (M) und einem Slaveknoten (1-9) über einen wenigstens einen Brückenknoten (2,3,4,5) umfassenden Pfad erfolgt, wobei der Statusdatensatz einen RSSI (Received Signal Strength Indication, Indikator für die Empfangssignalstärke) für die Kommunikation mit dem auf dem Pfad nachfolgenden Knoten (1-9, M) umfasst und der Master (M) die Verbindung des Slaveknotens (1-9) mit seinem Vorgängerknoten (2,3,4,5,M) löst und gegebenenfalls einen neuen Kommunikationspfad zu dem Slaveknoten (1-9) plant, wenn der RSSI wenigstens eines Knotens (1-9, M) auf dem Pfad einen RSSI-Schwellwert unterschreitet.

11. Verfahren gemäß einem der vorhergehenden Ansprüche,
**dadurch gekennzeichnet, dass** der Statusdatensatz einen maximalen Zeitunterschied zwischen den Systemzeiten im Slaveknoten (1-9) und dem auf dem Kommunikationspfad zum Master (M) vorangehenden Brückenknoten (2,3,4,5) umfasst, wobei der Master (M) die fragliche Verbindung des Slaveknotens (1-9) löst, wenn der maximale Zeitunterschied einen Zeitschwellwert überschreitet und vorzugsweise gleichzeitig ein anderer Anmeldeknoten (2,3,4,5,M) bereitsteht, von dessen Systemzeit die Systemzeit des Slaveknotens (1-9) weniger abweicht.

12. Verfahren gemäß einem der vorhergehenden Ansprüche,
**dadurch gekennzeichnet, dass** der Statusdatensatz einen mittleren Zeitunterschied zwischen den Systemzeiten im Slaveknoten (1-9) und dem auf dem Kommunikationspfad zum Master (M) vorangehenden Brückenknoten (2,3,4,5) umfasst, wobei der Master (M) dem Slaveknoten (1-9) und dem auf dem Pfad vorangehenden Brückenknoten (2,3,4,5) vorgibt, zusätzliche Synchronisationsmeldungen miteinander auszutauschen.

13. Verfahren gemäß einem der vorhergehenden Ansprüche,
**dadurch gekennzeichnet, dass** der Statusdatensatz eine maximale oder durchschnittliche Latenzzeit einer Verbindung zwischen Master (M) und Slaveknoten (1-9) umfasst, wobei der Master (M) bei Überschreiten eines Latenzschwellwerts durch die maximale oder die durchschnittliche Latenzzeit die Verbindung des Slaveknotens (1-9) löst und gegebenenfalls einen neuen Kommunikationspfad zu dem Slaveknoten (1-9) über andere Brückenknoten plant.

14. Verfahren gemäß einem der vorhergehenden Ansprüche,
**dadurch gekennzeichnet, dass** der Statusdatensatz eine ununterbrochene Laufzeit einer CPU, einer Sende- und/oder einer Empfangseinrichtung umfasst, wobei der Master (M) die Häufigkeit der Aufrufe des betreffenden Slaveknotens (1-9) verringert, wenn diese ununterbrochene Laufzeit einen Laufzeitschwellwert überschreitet.

15. Verfahren gemäß einem der vorhergehenden Ansprüche,
**dadurch gekennzeichnet, dass** der Statusdatensatz einen Zähler für die Anzahl an zum Eingehen einer Verbindung bereiten Anmeldeknoten und/oder für die Anzahl an empfangenen Anmeldeaufforderungen (A) umfasst, wobei der Master (M) zusätzliche Knoten (1-9) zum Aussenden weiterer Anmeldeaufforderungen (A) anweist, wenn diese Zähler einen Schwellwert nicht überschreiten.
